Europäisches Patentamt

**European Patent Office** (11) Publication number: **0 073 108**

Office européen des brevets **A1**

(12) **EUROPEAN PATENT APPLICATION**

(21) Application number: **82304027.4** (51) Int. Cl.³: **C 22 B 3/00**
**C 22 B 11/04**

(22) Date of filing: **30.07.82**

(30) Priority: **12.08.81 GB 8124682**

(43) Date of publication of application:
**02.03.83 Bulletin 83/9**

(84) Designated Contracting States:
**BE DE FR NL SE**

(71) Applicant: **Perrin, Robert Henry**
**20 Doctor's Hill**
**Stourbridge West Midlands(GB)**

(72) Inventor: **Perrin, Robert Henry**
**20 Doctor's Hill**
**Stourbridge West Midlands(GB)**

(74) Representative: **Parr, Ronald Edward**
**Colman House Station Road**
**Knowle Solihull West Midlands B93 0HL(GB)**

(54) A process for the recovery of metals.

㉗ A process for the recovery of metals from solutions containing them, particularly for recovering gold, silver, platinum or other precious metals in a pure form, comprises the use of a reduction reaction using as reducing agent a polyhydroxyl compound. Suitable polyhydroxyl compounds are sugars, particularly those having a lactone structure, for example L-ascorbic, D-iso-ascorbic acid and salts thereof.

EP 0 073 108 A1

**0073108**

# A PROCESS FOR THE RECOVERY OF METALS

This invention relates to a process for the recovery of metals from solutions containing them. Particularly, but not exclusively, it relates to a process for recovering gold, silver, platinum or other precious metals in a pure form by means of a reduction reaction using as reducing agent a polyhydroxyl compound.

The process can be applied, for example, to alloys, drosses, scrap, ores, mattes or organo-metallic complexes where these materials can conveniently be brought into solution. The process can be used to replace the conventional pyrometallurgical and electro refining processes commonly used in the precious metal refining industry.

The polyhydroxyl compound, which can be aliphatic or aromatic, can be one having two, three, four or more hydroxyl groups, and the hydroxyl groups can include primary or secondary hydroxyl groups. Any primary hydroxyl group can be, for example, in the form of an alkylol or other primary hydroxyl group.

Where the polyhydroxyl compound is aliphatic it is conveniently a compound containing only primary hydroxyl groups or both primary and secondary hydroxyl groups. Polyhydroxyl compounds with which the invention is particularly concerned are sugars (for example in monosaccharide or di-saccharide form) which term includes derivatives, for example gamma and other lactone derivatives. Examples of suitable mono-saccharides are hexoses, for instance glucose, though other forms of mono-saccharides can be used.

Another suitable type of polyhydroxyl compounds comprises polyhydroxyl alcohols, for example alcohols having at least one primary hydroxyl group attached to a terminal carbon atom. Where the polyhydroxyl alcohol is one having two primary hydroxyl groups it can be, for example, one in which the hydroxyl groups are separated by three, four or more linear chain carbon atoms. An example of an alpha-omega dihydroxyl alcohol of this type is sorbitol.

If the polyhydroxyl compound is one capable of forming water-soluble salts, for instance a compound containing a carboxylic group or a compound capable of existing in enolic form, the polyhydroxyl compound can be used in the form of such a salt.

In a preferred form of the invention the polyhydroxyl compound is an ascorbic acid compound, for example L-ascorbic acid, D-iso-ascorbic acid, salts thereof or related polyhydroxyl compounds having a lactone ring of the ascorbic acid type. The following description relates in particular to the use of L-ascorbic acid.

The process of the invention is applicable in particular to gold, silver and platinum but it can be applied also, for example, to precious metals of Group VIII of Mendeleeff's Periodic Table, for instance palladium, rhodium, ruthenium and iridium. In general, the process is of greatest interest for use where the metal to be recovered is in a mono-valent form, though it can be used when the metal is in divalent form or even a higher valency state. The process is applicable, for instance, to the recovery of gold or silver from aqueous solutions containing base metals such as copper and/or nickel.

The pH selected for the aqueous solution of the metal to be recovered depends to a large extent on what metals, if any, besides the metal intended to be recovered are present in the solution. For example, for the recovery of gold or silver from an aqueous solution containing also copper and/ or nickel a pH in the range 2-5 (especially 3.0 to 4.5) or 9-12 (especially 9.5 - 10.5), respectively, is suitable. Suitable concentrations of the gold or silver are in the range 0.4 - 2.5 molar, for example 1.4 or other values in the range 1.0 - 1.8.

It is preferable, particularly where ascorbic acid is used as the polyhydroxyl compound, that the process be carried out under conditions such that no appreciable amount of nitrous acid is formed, otherwise there is a danger of the ascorbic acid being prematurely oxidised.

The invention is illustrated by the following Examples which relate to embodiments of the process of the invention.

### EXAMPLE 1

This Example describes a process for the recovery of silver in the form of a powder from scrap metal containing silver, copper, zinc and nickel.

One kg. of the scrap was dissolved in 2.32 kg. of 59% w/v nitric acid. When the reaction had ceased, the solution was sampled and analysed for silver. The analysis results showed a silver content of 909 gm. in the original scrap material. The silver solution was diluted to a volume of 5 litres with de-ionised water and the pH adjusted to 4.5 with 25% ammonium hydroxide solution.

Throughout the pH adjustment, the silver solution was vigorously stirred.

The silver solution, now at pH 4.5, was then filtered and to the filtrate was added 741 gm. of L-ascorbic acid in approximately 150 gm. portions over a period of 6 minutes. The solution was thoroughly mixed during the precipitation but no vortex was allowed to entrain air into the solution. After the last addition of ascorbic acid, the supernatant liquor was tested for the presence of silver ions with saturated sodium chloride solution. The precipitated silver was then separated from the supernatant liquor in a basket type centrifuge fitted with a polypropylene bag. The silver was washed with cold water until the washings, tested by Merck papers, showed no copper, nickel or zinc. The metal was then washed with one litre of de-ionised water at 80°C and allowed to spin until no liquid was discernible at the centrifuge drain. The metal powder was then dried at 100°C in vacuo for 6 hours. The final yield of silver powder was 908 gm. and subsequent analyses showed a purity of 99.99+% silver.

## EXAMPLE 2

This Example describes a process for the recovery of gold in the form of a powder from scrap metal containing gold, silver, copper and nickel.

500 gm. of the scrap was digested with 2.5 litres of aqua regia, with constant stirring.

The resulting solution was diluted to a volume of 6 litres with water and filtered. The filtrate was analysed for gold which showed a gold content of 35.7% in the original scrap. The silver chloride retained on the filter was reserved for silver recovery.

To the filtrate was added 900 ml. of a 20% w/v solution of L ascorbic acid over a period of 15 minutes, with vigorous stirring, no vortex being allowed to entrain air in the solution.

When the ascorbic acid addition had been completed, the supernatant liquor was tested for gold ions by the Stannous chloride method ('purple of Cassius').

T he precipitate of gold was separated from the supernatant liquor in a basket type centrifuge fitted with a polypropylene bag.

The precipitate was washed with 1.2 litres of 5% w/v hydrochloric acid solution at a temperature of $80^{o}C$, and then with cold water until the washings were negative when tested with Merck copper and nickel papers. Finally, the precipitate was washed with one litre of de-ionised water at $80^{o}C$.

The gold powder was dried at $100^{o}C$ in vacuo for four hours. The final yield of gold powder was 178.1 gm. and subsequent analyses showed a purity of 99.9+% gold.

EXAMPLE 3

101.7 kg. of impure metallic silver 'flake', which had been recovered electrolytically from a photographic process fixing solution, was dissolved in nitric acid. The resulting solution was filtered to remove insolubles and the filtrate analysed for silver content. The result showed a silver content of 79.96% silver.

The filtrate pH was adjusted to 2.85 with aqueous ammonium hydroxide and the silver concentration adjusted to approximately 0.75M with de-ionised water. To the resulting solution was added 67kg. of L-ascorbic acid at the approximate rate of 5 kg. of ascorbic acid per minute, the solution being vigorously stirred during and after the addition. A sample of the liquors was tested for silver ions with saturated sodium chloride to check on completeness of precipitation.

The slurry of precipitated silver was pumped to a basket-type centrifuge fitted with a polypropylene bag. The cake was washed for 10 minutes in the centrifuge with cold water and finally with 140 litres of de-ionised water at 80°C. The cake was spun until no further liquid was discernible at the centrifuge drain. The damp cake was then melted in an induction furnace and the molten silver poured into ingot moulds to produce ingots weighing approximately 20 kg. each. The total weight of silver ingots produced was 81.12 kg. and the purity of each ingot was not less than 99.96% silver.

EXAMPLE 4

51 kg. of silver chloride contaminated withdi-iodofluorescien and potassium chloride was slurried in 16% aqueous ammonium hydroxide solution by vigorous stirring.

The temperature was raised from 18°C to 22°C, and 39 kg. of L-ascorbic acid added at the rate of 3kg. of ascorbic acid per minute. The temperature rose to approximately 26°C during this operation.

The silver slurry was centrifuged and the cake was melted and poured as an ingot, as described in Example 3.

The total weight of silver ingots produced was 35.90 kg. and the purity of each ingot was not less than 99.99% silver. The weight of silver in the original weight of silver chloride, determined by analysis was 36.05 kg.

EXAMPLE 5

242.51 kg. of silver ore concentrates from a large mining operation, containing other metallic compounds as impurities, these being primarily lead and zinc compounds, was digested with 1000 kg. of 59% Nitric acid for 3 hours at an initial temperature of 70°C. The temperature was allowed to rise to 105°C by the end of the digestion period. The resulting solution of metal nitrates was pumped to a holding vessel and diluted to a volume of 850 litres with de-ionised water. The pH was then adjusted to 3 with ammonium hydroxide solution. Samples of the solution were analysed for silver content.

The partially neutralised solution was filtered and the filtrate was cooled to 15°C. To the cooled filtrate was added 74 kg. of L-ascorbic acid at the rate of 5 kg. per minute. This addition was based upon the result of the analysis above. Vigorous stirring of the filtrate was maintained throughout the addition operations, but no air was allowed to be entrained in the solution.

The temperature of the filtrate/slurry rose to $24^{o}C$ during the addition period.

The silver slurry was centrifuged as before, but 250 litres of de-ionised water at $80^{o}C$ were used in the final wash. The centrifuge cake was melted as before and cast into ingots. The final weight of silver ingots was 90.43 kg. and the purity of each ingot was not less than 99.97% silver. The weight of silver in the original weight of concentrates, determined by analysis was 91.15kg.

### CLAIMS

1. A process of recovering by means of a reduction reaction a precious or other metal from a solution thereof by using as a reducing agent a polyhydroxyl compound.

2. A process according to Claim 1, in which the reducing agent is a sugar.

3. A process according to Claim 2, in which the sugar is one having at least one primary hydroxyl group.

4. A process according to Claim 2 or 3, in which the sugar is a gamma lactone.

5. A process according to Claim 4, in which the gamma lactone is ascorbic acid.

6. A process according to Claim 5, in which the process is carried out under conditions in which substantially no nitrous acid ($HNO_2$) is present.

7. A process according to any of the preceding claims, in which the metal to be recovered is a metal of Group VIII of Mendeléeff's Periodic Table.

8. A process according to any of Claims 1 to 6, in which the metal to be recovered is gold or silver.

9. A process according to any of the preceding claims, in which said solution contains dissolved therein lead, zinc, copper or nickel.

10.    A precious metal that has been recovered by use of the process claimed in any of the preceding claims.

European Patent Office

**EUROPEAN SEARCH REPORT**

**0073108**
Application number

EP 82 30 4027.4

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| Y | US – A – 3 345 158 (M.L. BLOCK et al.) <br> * column 5 * | 1 | C 22 B 3/00 <br><br> C 22 B 11/04 |
| Y | US – A – 4 078 918 (C.A. PERMAN) <br> * column 4 * | 1 | |
| A | GB – A – 194 339 (H. BARDT) | | **TECHNICAL FIELDS SEARCHED (Int.Cl. 3)** |
| A | GB – A – 211 005 (H. BARDT) | | |
| A | US – A – 1 448 475 (L. WEISBERG) | | C 22 B 3/00 <br><br> C 22 B 11/04 |
| A | US – A – 2 503 104 (E. FARBER) | | |
| A | US – A – 3 892 557 (K. LUTZ et al.) | | |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 08-11-1982 | SUTOR |

EPO Form 1503.1  06.78